Europäisches Patentamt

European Patent Office

Office européen des brevets

(11) Veröffentlichungsnummer: **0 153 434**
**B1**

(12) **EUROPÄISCHE PATENTSCHRIFT**

(45) Veröffentlichungstag der Patentschrifft:
07.02.90

(21) Anmeldenummer: 84102159.5

(22) Anmeldetag: 01.03.84

(51) Int. Cl. 5: **B 60 R 16/02**

(54) Elektrische Steuervorrichtung für Fahrzeuge.

(43) Veröffentlichungstag der Anmeldung:
04.09.85 Patentblatt 85/36

(45) Bekanntmachung des Hinweises auf die Patenterteilung:
07.02.90 Patentblatt 90/06

(84) Bennante Vertragsstaaten:
BE FR GB IT LU NL SE

(56) Entgegenhaltungen:
EP-A-0 013 103
EP-A-0 023 105
EP-A-0 088 953
DE-A-2 437 314
DE-A-2 847 922
DE-A-3 113 191

Patent Abstracts of Japan Band 6, Nr. 178, 11. September 1982 & JP-A-57-87738

(73) Patentinhaber: Petri AG
Bahnweg 1
D-8750 Aschaffenburg (DE)

(72) Erfinder: Roggendorf, Peter
Tucholskystrasse 44
D-6000 Frankfurt/Main (DE)
Erfinder: Buchmann, Rainer
Orber Strasse 6
D-6000 Frankfurt 61 (DE)

(74) Vertreter: Knoblauch, Ulrich, Dr.-Ing.
Kühhornshofweg 10
D-6000 Frankfurt am Main 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine elektrische Steuervorrichtung für Fahrzeuge, bei der das gegenüber dem Chassis drehbare Lenkrad außer einem Hupenkontakt, der über eine durch einen Schleifring in einen lenkradseitigen und einen chassisseitigen Abschnitt unterteilte Hupenleitung mit der Hupe bzw. dem Hupenrelais verbunden ist, eine Eingabevorrichtung von Funktionseinheiten des Fahrzeugs zuzuführenden Steuerinformationen aufweist, die mittels eines am Lenkrad angebrachten Senders, der die Steuerinformation als einem hochfrequenten Trägersignal aufgeprägte Codesignale abgibt und dessen Ausgang mit dem lenkradseitigen Hupenleitungsabschnitt verbunden ist, nach Auskopplung aus dem chassisseitigen Hupenleitungsabschnitt an mindestens einen an einem anderen Fahrzeugteil als dem Lenkrad angebrachten Empfänger übertragbar sind, der nach Demodulieren der hochfrequenten Signale die Codesignale in Steuersignale für die Funktionseinheiten umwandelt.

Bei einer bekannten Steuervorrichtung dieser Art (DE-A-3 113 191) werden als Steuerinformation Codesignale in Form unterschiedlicher Signalfrequenzen einem Träger von mehreren 10 kHz aufgeprägt. Zur Ein- und Auskopplung der Codesignale dienen Signalübertragerspulen (Transformatoren), die sehr aufwendig sind. Ein Glättungskondensator absorbiert Störanteile, die z. B. von der Zündanlage des Fahrzeugs erzeugt werden.

Bei einer solchen Steuervorrichtung erhebt sich jedoch das folgende Problem: Wenn die Frequenzen dicht benachbart sind, erfordert ihre Unterscheidung einen erheblichen Aufwand. Sind die Frequenzen dagegen nicht benachbart, ergibt sich eine schlechte Anpassung an die Induktivität der im Übertragungskreis liegenden Spulen. Das Problem ist um so schwieriger, je mehr unterschiedliche Signale übertragen werden sollen. Außerdem besteht die Gefahr, das Harmonische der verschiedenen Frequenzen im Bereich der Rundfunkfrequenzen liegen.

Ferner ist eine Steuervorrichtung bekannt (DE-A-2 847 922), bei der am Pralltopf des Lenkrades elektrische Bedienungseinrichtungen vorgesehen sind, mit deren Hilfe elektrischen Verbrauchern im Fahrzeug Informationen zuführbar sind. Wegen der Verwendung von Sender und Empfänger genügt eine einzige Leitung zur Übertragung der Informationen aller Bedienungseinrichtungen. Die Informationen werden in der Form unterschiedlicher Impulse übertragen. Es wird auch nur ein einziger Schleifring in dieser Übertragungsleitung benötigt, was gegenüber solchen Steuervorrichtungen, die für jede Bedienungseinrichtung eine eigene Übertragungsleitung benötigen, eine erhebliche Vereinfachung darstellt. Darüber hinaus hat das Anbringen der Bedienungseinrichtungen, wie Tasten, am Lenkrad, statt beispielsweise am Armaturenbrett den Vorteil, daß der Fahrer die Bedienungseinrichtungen leichter überblicken und bedienen kann.

Es ist ferner allgemein üblich, am Lenkrad einen Hupenkontakt vorzusehen, der über eine durch einen Schleifring in einen lenkradseitigen und einen chassisseitigen Abschnitt unterteilte Hupenleitung mit der Hupe bzw. dem Hupenrelais verbunden ist.

Der Erfindung liegt die Aufgabe zugrunde, eine weitere Verbesserung einer elektrischen Steuervorrichtung der eingangs beschriebenen Art anzugeben, insbesondere im Hinblick auf eine sichere Übertragung der Steuerinformationen.

Diese Aufgabe wird erfindungsgemäß dadurch gelöst, daß der Ausgang des Senders über ein für Gleichstrom sperrendes Ankopplungselement mit dem lenkradseitigen Hupenleitungsabschnitt und der Eingang des Empfängers über ein für Gleichstrom sperrendes Ankopplungselement direkt mit dem chassisseitigen Leitungsabschnitt zwischen Schleifring und Hupe beziehungsweise Hupenrelais verbunden ist und daß die Steuerinformationen als Bi-Phase-Code auf das hochfrequente Trägersignal aufmoduliert sind.

Bei dieser Anordnung wird die ohnehin meist vorhandene Hupenleitung auch zur Übertragung der Steuerinformationen benutzt. Es ist auch kein zusätzlicher Schleifring erforderlich. Die hochfrequenten Signale können ohne weiteres auf die Hupenleitung eingekoppelt werden. Dies ist möglich, da die Hupenleitung einerseits durch ihre räumliche Ausdehnung (ihre Länge beträgt ca. 1,5 m) und andererseits durch die angeschlossene Hupe bzw. das Hupenrelais eine gewisse Eigeninduktivität besitzt, die als Blindwiderstand einen Spannungsabfall für das eingekoppelte hochfrequente Signal aufbaut.

Infolgedessen kann der Empfänger ein entsprechendes hochfrequentes Signal auskoppeln. Da der Empfänger mit dem chassisseitigen Hupenleitungsabschnitt verbunden ist, ergibt sich ein besonders guter Empfang der hochfrequenten Signale. Hier treten verhältnismäßig große Signalamplitude auf. Vom Empfänger sind dann Einzelleitungen zu den jeweiligen Funktionseinheiten zu verlegen. Die Hochfrequenz hat ferner den Vorteil, daß mit sehr geringen Strömen gearbeitet werden kann, weil der Schleifring bei Verschmutzung eine Kapazität bildet, die für den hochfrequenten Strom kein Hindernis darstellt. Da die hochfrequenten Signale unterschiedliche Steuerinformationen enthalten können, ist auch die Zahl der am Lenkrad eingebbaren Steuerinformationen nicht begrenzt. Das mit einem Binärcode modulierte hochfrequente Signal erlaubt eine sehr einfache Unterscheidung zwischen verschiedenen Steuerinformationen. Durch die Verwendung des Bi-Phase-Code ergibt sich bei der Übertragung eine noch höhere Sicherheit.

Der Sender kann einen Spannungsversorgungsteil aufweisen, der parallel zum einseitig an Masse liegenden Hupenkontakt geschaltet ist. Die Spannungsversorgung des Senders kann daher mit einem von der Batterie über die Hupe fließenden Strom aufgebaut werden. Dieser Strom ist um ein Vielfaches geringer als der zum Ansprechen der Hupe erforderliche Strom.

3

Wegen der geringen Leistung der hochfrequenten Signale kommt man in der Praxis mit 5 mA, also etwa 1/100 des Hupenansprechstromes, aus. Dies hat den Vorteil, daß für den Sender keine zusätzliche Verbindung mit der Batterie des Fahrzeugs erforderlich ist und daß der Sender nicht mit einer eigenen, von Zeit zu Zeit auszuwechselnden Batterie ausgestattet werden muß.

Der Sender ist zweckmäßigerweise für eine Frequenz von 40 bis 60 kHz, vorzugsweise etwa 50 kHz ausgelegt. Diese Frequenz gibt unter Berücksichtigung der üblichen Hupenleitungen und Hupen bzw. Hupenrelais die besten Übertragungsresultate.

Empfehlenswert ist auch eine Umschaltvorrichtung, die den Sender in Abhängigkeit von der Eingabe einer Steuerinformation aus einer Ruhebetriebsstellung in eine Sendebetriebsstellung schaltet. Durch diese Umschaltung aus dem "Stand-by"-Mode in den Sende-Mode läßt sich Energie sparen.

Eine senderseitig sehr einfache Ausführung ergibt sich, wenn der Sender einen Codierer, der eine oder mehrere betätigte Tasten von einem als Eingabevorrichtung dienenden Tastenfeld durch einen Binärcode kennzeichnet, und einen Parallel-Seriell-Wandler, über den der Binärcode dem Modulator zugeführt wird, aufweist.

Ebenso ergibt sich empfängerseitig eine sehr einfache Ausführung, wenn der Empfänger einen Decodierer aufweist, der den vom Demodulator abgegebenen Binärcode decodiert und über einen Seriell-Parallel-Wandler als Steuersignal der entsprechenden Funktionseinheit zuführt.

Der Ausdruck "Hupe" soll jegliche Art von akustischem Signalerzeuger und jegliche Art der Ansteuerung, also auch über ein Relais, umfassen.

Die Erfindung wird nachstehend anhand in der Zeichnung dargestellter bevorzugter Ausführungsbeispiele näher erläutert. Es zeigen:

Fig. 1 ein Blockschaltbild einer erfindungsgemäßen Steuervorrichtung,

Fig. 2 ein Blockschaltbild einer abgewandelten Ausführungsform,

Fig. 3 eine Draufsicht auf ein erfindungsgemäß ausgestattetes Lenkrad,

Fig. 4 Teile dieses Lenkrads in auseinandergezogener Darstellung und

Fig. 5 eine Teilansicht einer anderen Ausführungsform.

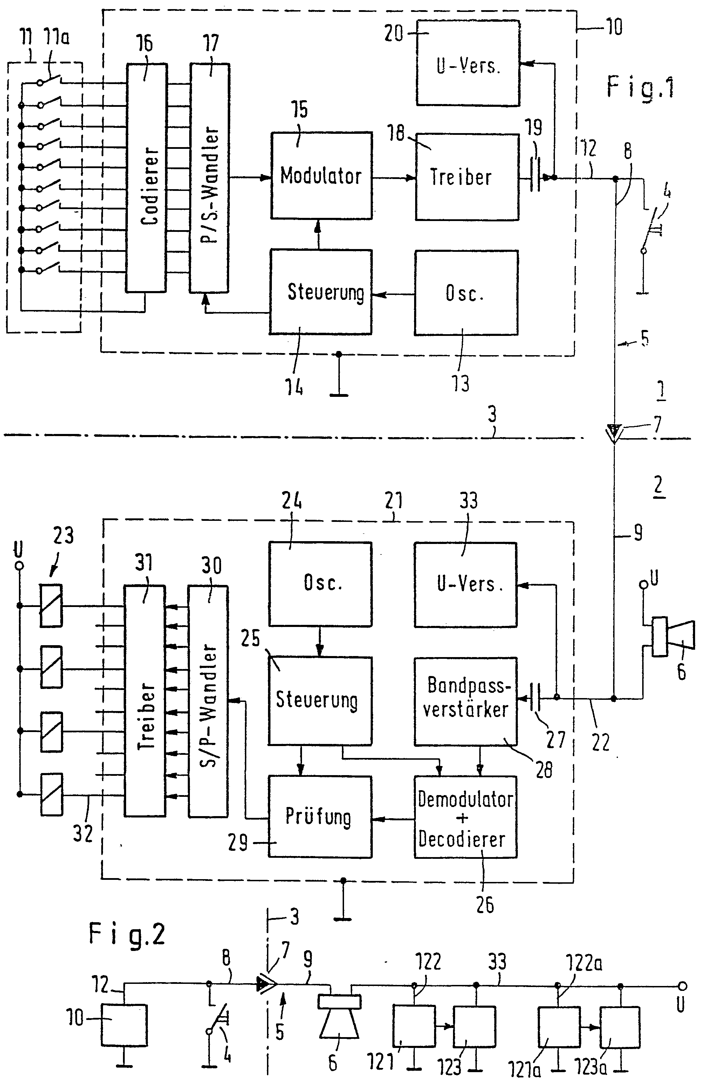

In Fig. 1 sind ein Lenkrad-Bereich 1 und ein Chassis-Bereich 2 veranschaulicht, die durch eine strichpunktierte Linie 3 getrennt sind. Der Chassis-Bereich umfaßt alle Teile des Fahrzeugs mit Ausnahme des Lenkrades. Im Lenkrad befindet sich ein einseitig an Masse liegender Hupenkontakt 4, der über eine Hupenleitung 5 mit einer einseitig an der Batteriespannung U liegenden und im Chassis-Bereich angeordneten Hupe 6 verbunden ist. Die Hupenleitung 5 weist an der Trennstelle der Bereiche 1 und 2 einen Schleifring 7 auf, durch den die Hupenleitung in einen

4

lenkradseitigen Abschnitt 8 und einen chassisseitigen Abschnitt 9 unterteilt wird.

Am Lenkrad ist ein Sender 10 mit einer als Tastenfeld ausgebildeten Eingabevorrichtung 11 angebracht. Der Ausgang 12 des Senders ist mit dem lenkradseitigen Hupenleitungsabschnitt 8 verbunden. Der Sender weist einen Oszillator 13 auf, der beispielsweise mit 50 kHz arbeitet. Über eine Ablaufsteuerung 14 ist der, Oszillator mit einem Modulator 15 verbunden. Ein Codierer 16 erzeugt in Abhängigkeit vom Drücken einer der Tasten 11a der Eingabevorrichtung 11 einen Binärcode. Dieser wird in einem Parallel-Seriell-Wandler 17 in eine Impulsreihe umgewandelt und dem Modulator 15 zugeführt. An seinem Ausgang ergibt sich ein im Bi-Phase-Code moduliertes hochfrequentes Signal. Dieses wird über eine Treiberstufe 18 verstärkt und über einen Koppelkondensator 19 an die Hupenleitung 5 angekoppelt. Mit dem Ausgang 12 ist ferner eine Spannungsversorgung 20 verbunden, die eine von der Batteriespannung U über die Hupenleitung 5 gespeiste Spannungsstabilisierungsschaltung aufweist. Diese ist in üblicher Weise mit Kondensatoren ausgestattet. Damit über diese Kondensatoren kein das hochfrequente Signal schwächender Kurzschluß erfolgt, ist die Spannungsversorgung 20 außerdem mit einer Gleichspannungsauskopplung mit zwei Dioden versehen.

Im Chassis-Bereich Z ist ein Empfänger 21 vorgesehen, dessen Eingang 22 mit dem chassisseitigen Hupenleitungsabschnitt 9 verbunden ist und der in Abhängigkeit von der gedrückten Taste 11a eine von mehreren Funktionseinheiten 23, hier dargestellt als an Batteriespannung U liegende Relais, ansteuert. Der Empfänger besitzt ebenfalls einen Oszillator 24, der mit 50 kHz betrieben wird. Er ist über eine Ablaufsteuerung 25 mit einem Demodulator und Decodierer 26 verbunden, dem die hochfrequenten Signale vom Eingang 22 über einen Koppelkondensator 27 und einen Bandpaßverstärker 23 zugeführt werden. Das decodierte Signal wird in einer Prüfvorrichtung 29 geprüft und über einen Seriell-Parallel-Wandler 30 in ein Steuersignal umgesetzt, das über eine Treiberstufe 31 und eine entsprechende Ausgangsleitung 32 der anzusteuernden Funktionseinheit 23 zugeführt wird. Der Empfänger 21 hat eine Spannungsversorgung 33, die derjenigen des Senders 10 entspricht.

Im Betrieb werden die Tasten 11a ständig auf Betätigung hin überprüft. Wird eine Taste 11a gedrückt, schaltet der Sender 10 aus der Ruhebetriebsstellung in die Sendebetriebsstellung um. Die durch die gewählte Taste 11a bestimmte Steuerinformation wird im Codierer 16 in ein Binärsignal umgesetzt und im Bi-Phase-Code im Modulator 15 auf die Trägerfrequenz von 50 kHz aufmoduliert.

Die Ablaufsteuerung 14 sorgt dafür, daß das so gebildete hochfrequente Signal ständig wiederholt wird, beispielsweise alle 40 ms. Beim Loslassen der Taste 11a wird ein Schlußsignal gesendet, aus dem der Empfänger 21 erkennt, daß keine weiteren Informationen übertragen werden.

Aufgrund der Eigeninduktivität der Hupenleitung 5 und der Hupe 6 wird für das hochfrequente Signal ein Spannungsabfall aufgebaut. Die Signalamplitude beträgt hierbei etwa 0,3 bis 0,7 V.

Da durch externe Störspannungseinstreuung (Zündfunken, Elektromotor) ein erheblicher Störuntergrund vorhanden sein kann, wird das hochfrequente Signal im Empfänger 21 kapazitiv von der Hupenleitung 5 ausgekoppelt und dem geregelten Breitbandverstärker 28 zugeführt, der noch Signale mit 0,5 mV selektiv verstärken kann. Im Demodulator 26 wird aus dem hochfrequenten Signal ein Rechtecksignal gewonnen, das den gesendeten Bi-Phase-Code darstellt. Die anschließende Codeprüfung in der Prüfvorrichtung 29 setzt ein dreimaliges Senden des gleichen Binärcodes voraus, um die entsprechende Information über den Seriell-Parallel-Wandler 30 und die Treiberstufe 31 der gewünschten Funktionseinheit 23 zuzuführen.

Als Funktioneinheiten kommen die verschiedensten steuerbaren Einrichtungen eines Fahrzeuges in Betracht, beispielsweise Schaltvorrichtungen für Scheinwerfer, Fensterheber, Lüftungs- und Klimaanlagen u.dgl. Die Funktionseinheiten können auch Meß- und/oder Anzeigevorrichtungen sein, die beim Auftreten einer entsprechenden Steuerinformation eine Messung durchführen und/oder eine Anzeige darstellen.

Bei der Ausführungsform nach Fig. 2 werden für entsprechende Teile um 100 gegenüber Fig. 1 erhöhte Bezugszeichen verwendet. Die Anordnung von Hupenkontakt 4, Hupenleitung 5 und Hupe 6 ist dieselbe wie in Fig. 1. In diesem Fall ist der Sender 10 mit seinem Ausgang 12 mit dem lenkradseitigen Hupenleitungsabschnitt 9 verbunden. Die Empfänger 121 und 121a sind jedoch dezentraliert im Fahrzeug angebracht und jeweils der zugehörigen Funktionseinheit 123, 123a dicht benachbart. Die Eingänge 122 und 122a gehen von einer Batteriespannung U führenden Leitung 33 des Bordnetzes aus. Zwar sind die hochfrequenten Signale an dieser Stelle etwas schwächer als im chassisseitigen Hupenleitungsabschnitt 9. Die Empfänger 121, 121a können aber ohne weiteres mit einer solchen Selektion und Verstärkung ausgeführt werden, daß die Steuerinformation korrekt empfangen wird. Jeder Empfänger gibt nur dann ein Steuersignal an die zugehörige Funktionseinheit weiter, wenn ein ihm zugeordnetes Codesignal empfangen wird.

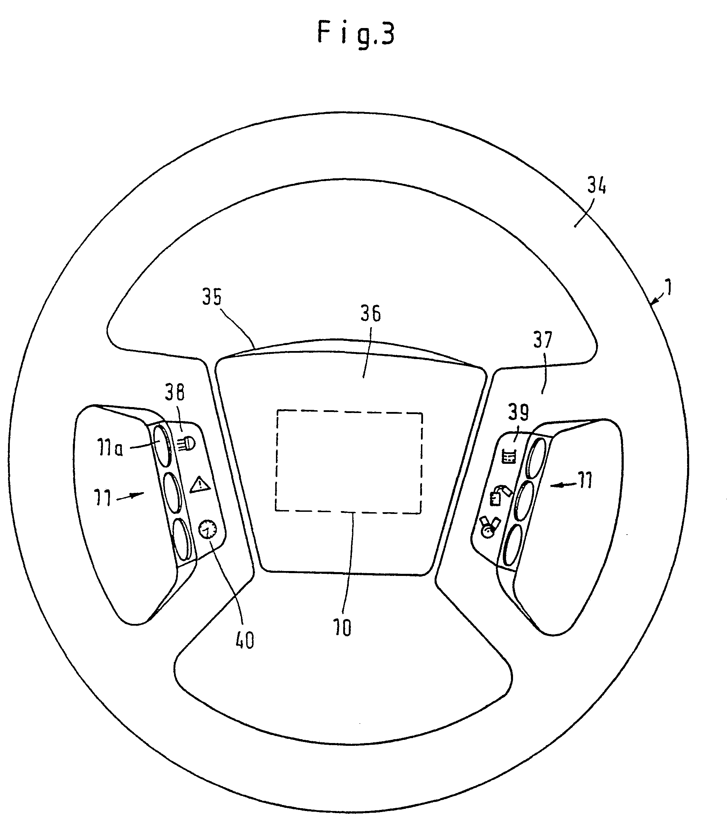

In Fig. 3 ist ein Lenkrad 1 veranschaulicht, das einen Radkranz 34, eine Nabe 35 mit einer den Hupenkontakt 4 betätigenden Platte 36 und Verbindungsstreben 37 aufweist. Der Empfänger 10 ist in die Nabe eingebaut. Die Eingabevorrichtung 11 besteht aus zwei Tastengehäusen 38 und 39, die je mit drei Tasten 11a versehen sind, denen je ein Symbol 40 zugeordnet ist.

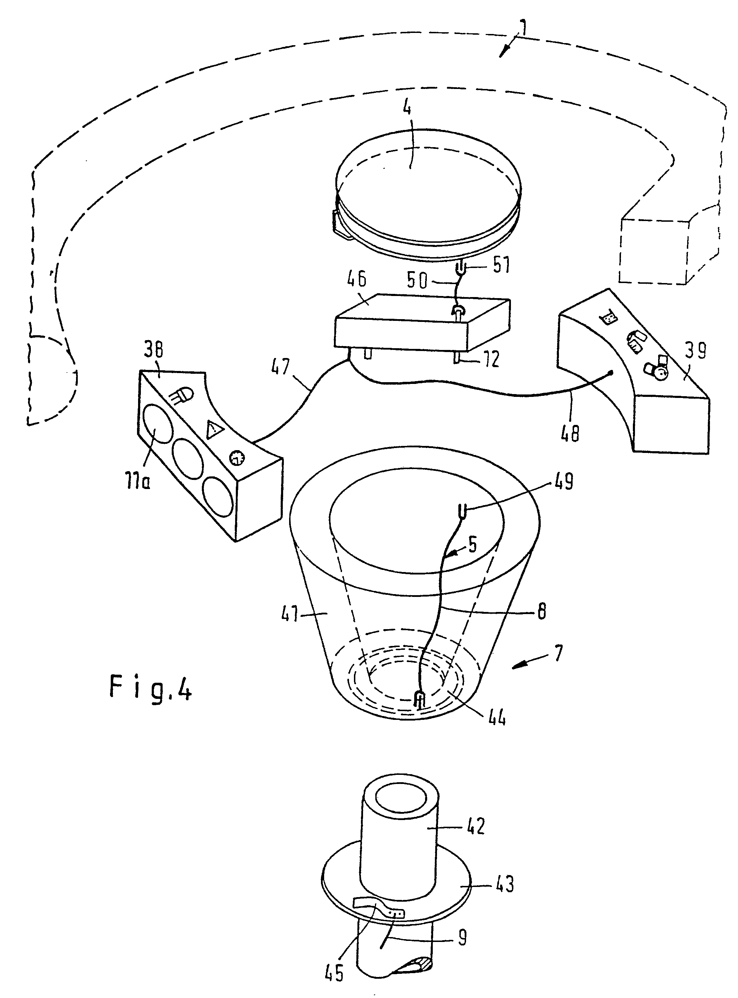

Fig. 4 zeigt das Lenkrad der Fig. 3 in auseinandergezogenem Zustand. Das Lenkrad 1 ist mit einer Nabe 41 verbunden, die auf der Lenksäule 42 sitzt. Diese ist in einem Lager 43 gehalten. An der Unterseite der Nabe 41 befindet

sich eine Schleifbahn 44 des Schleifringes 7. Am Lager 43 ist ein zugehöriger Schleifer 45 angebracht. Die Schleifbahn 44 ist mit dem lenkradseitigen Abschnitt 8 der Hupenleitung, der Schleifer 45 mit dem chassisseitigen Abschnitt 9 der Hupenleitung verbunden. Alle mit "-" versehenen Teile liegen auf Massepotential, sei es durch eine spezielle Leitungsverbindung oder durch mechanische, Anlage leitender Teile aneinander. Im Bereich der Nabe 41 befindet sich unterhalb des Hupenkontakts 4 eine Baueinheit 46, die den Sender 10 enthält. Diese Baueinheit 46 ist über Leitungen 47 und 48 mit je einem Tastengehäuse 38 bzw. 39 verbunden. Der Ausgang 12 wird durch einen durchgehenden Stift gebildet, so daß der Stecker 49 der ursprünglichen Hupenleitung unmittelbar auf das eine Ende des Stiftes gesteckt werden kann und lediglich ein kurzes zusätzliches Leitungsstück 50 zwischen dem anderen Ende des Stiftes und dem Anschluß 51 des Hupenkontakts 4 angebracht werden muß. Eine solche Anordnung ist ohne weiteres durch Nachrüsten in ein vorhandenes Fahrzeug einbaubar.

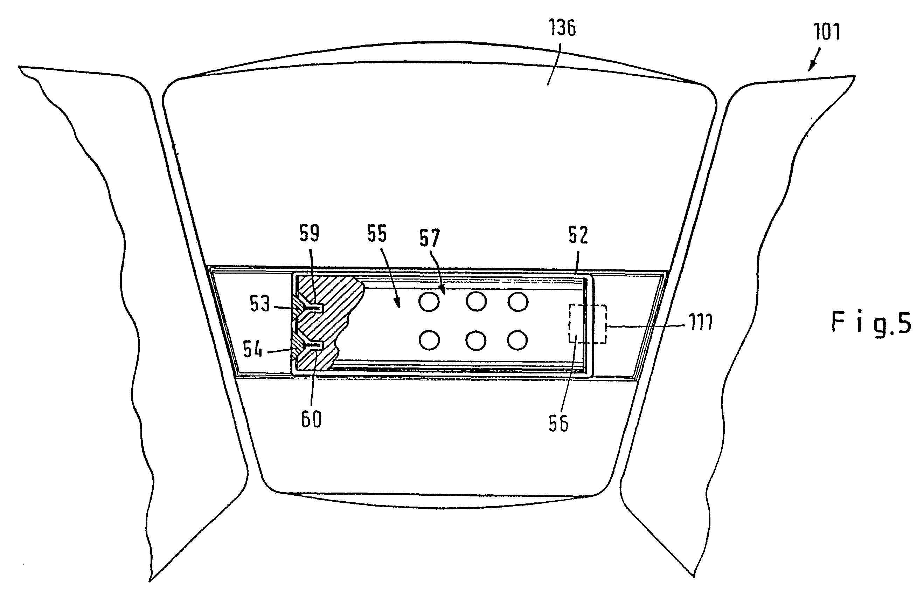

Bei der Ausführungsform nach Fig. 5 ist in eine feststehende Mittelplatte 136 eines Lenkrades 101 eine Ablage 52 in der Form einer Vertiefung vorgesehen. An einer Stirnwand befindet sich eine Eingabevorrichtung 111 in der Form eines auf IR-Strahlung ansprechenden Organs. Auf der gegenüberliegenden Seite befinden sich zwei als Stecker ausgebildete Ladekontakte 53 und 54, von denen der eine mit dem Ausgang 12 des Senders und der andere mit Masse verbunden ist. Ein Geber 55 vermag mit einem IR-Strahlung erzeugenden Organ 56 Steuerinformationen durch Strahlungsimpulse auf die Eingabevorrichtung 111 zu übertragen. Mit Hilfe einer Wahleinrichtung 57, die beispielsweise mit berührungslos schaltenden Sensoren ausgestattet ist, können bestimmte Steuerinformationen ausgewählt und über die Koppelstelle 56/111 in den Sender übertragen werden. Der Geber 55 besitzt zwei Steckbuchsen 59 und 60, in welche die Ladekontakt-Stecker eingreifen, wenn er in die Ablage 52 eingeführt worden ist. Über diese Stecker kann der Akkumulator des Gebers während der Fahrt aufgeladen werden. Die Eingabevorrichtung 111 kann aber auch vom Geber betätigt werden, wenn sich dieser nicht in der Ablage befindet, also beispielsweise auch von außerhalb des Fahrzeugs, insbesondere um die Türen zu entriegeln.

**Patentansprüche**

1. Elektrische Steuervorrichtung für Fahrzeuge, bei der das gegenüber dem Chassis drehbare Lenkrad außer einem Hupenkontakt (4), der über eine durch einen Schleifring (7) in einen lenkradseitigen und einen chassisseitigen Abschnitt (8, 9) unterteilte Hupenleitung (5) mit der Hupe (6) bzw. dem Hupenrelais verbunden ist, eine Eingabevorrichtung (11) von Funktionseinheiten des Fahrzeugs zuzuführenden Steuerinformationen aufweist, die mittels eines am Lenkrad (2) angebrachten Senders (10), der die Steuerinformation als einem hochfrequenten Trägersignal aufgeprägte Codesignale abgibt und dessen Ausgang mit dem lenkradseitigen Hupenleitungsabschnitt (8) verbunden ist, nach Auskopplung aus dem chassisseitigen Hupenleitungsabschnitt (9) an mindestens einen an einem anderen Fahrzeugteil als dem Lenkrad angebrachten Empfänger (21) übertragbar sind, der nach Demodulieren der hochfrequenten Signale die Codesignale in Steuersignale für die Funktionseinheiten umwandelt, dadurch gekennzeichnet, daß der Ausgang des Senders (10) über ein für Gleichstrom sperrendes Ankopplungselement (19) mit dem lenkradseitigen Hupenleitungsabschnitt (8) und der Eingang des Empfängers (21; 212; 121a) über ein für Gleichstrom sperrendes Ankopplungselement (27) direkt mit dem chassisseitigen Leitungsabschnitt (9) zwischen *Schleifring* (7) und Hupe (6) beziehungsweise Hupenrelais verbunden ist und daß die Steuerinformationen als Bi-Phase-Code auf das hochfrequente Trägersignal aufmoduliert sind.

2. Steuervorrichtung nach Anspruch 1, dadurch gekennzeichnet, daß der Sender (10) für eine Frequenz von 40 bis 60 kHz, vorzugsweise etwa 50 kHz, ausgelegt ist.

3. Steuervorrichtung nach Anspruch 1 oder 2, gekennzeichnet durch eine Umschaltvorrichtung, die den Sender (10) in Abhängigkeit von der Eingabe einer Steuerinformation aus einer Ruhebetriebsstellung in eine Sendebetriebsstellung schaltet.

4. Steuervorrichtung nach einem der Ansprüche 1 bis 3, dadurch gekennzeichnet, daß der Sender (10) einen Codierer (16), der eine oder *mehrere* betätigte Tasten (11a) von einem als Eingabevorrichtung (11) dienenden Tastenfeld durch einen Bi-Phase-Code kennzeichnet, und einen Parallel-Seriell-Wandler (17), über den der Bi-Phase-Code dem Modulator (15) zugeführt wird, aufweist.

5. Steuervorrichtung nach einem der Ansprüche 1 bis 4, dadurch gekennzeichnet, daß der Empfänger (21) einen Decodierer (26) aufweist, der den vom Demodulator abgegebenen Bi-Phase-Code decodiert und über einen Seriell-Parallel-Wandler (30) als Steuersignal der entsprechenden Funktionseinheit (23) zuführt.

## Claims

1. Electric control device for vehicles, wherein the steering wheel, which is rotatable relative to the chassis, has a horn contact (4) which is connected to the horn (6), or respectively the horn relay, via a horn lead (5) which is divided into a steering wheel section (8) and a chassis section (9) by means of a slip ring (7), and also has an input device (11) for inputting bits of control information which are to be supplied to operating units of the vehicle and which, after disconnection from the chassis section (9) of the horn lead, are transferable, by means of a transmitter (10) which is mounted on the steering wheel (2) and issues the control information as code signals, which are superposed on a high-frequency carrier signal, the output of said transmitter being connected to the steering wheel section (8) of the horn lead, to at least one receiver (21), which is mounted on a vehicle component other than the steering wheel and converts the code signals into control signals for the operating units after demodulation of the high-frequency signals, characterised in that the output of the transmitter (10) is connected to the steering wheel section (8) of the horn lead via a coupling element (19) which blocks direct current, and the input of the receiver (21; 212; 121a) is connected directly to the chassis section (9) of the lead between slip ring (7) and horn (6), or respectively the horn relay, via a coupling element (27) which blocks direct current, and in that the bits of control information are modulated upon the high-frequency carrier signal as a bi-phase code.

2. Control device according to claim 1, characterised in that the transmitter (10) is designed for a frequency of 40 to 60 kHz, preferably approximately 50 kHz.

3. Control device according to claim 1 or 2, characterised by a switching device which switches the transmitter (10) from a position of rest into a position of transmission depending on the input of a bit of control information.

4. Control device according to one of claims 1 to 3, characterised in that the transmitter (10) has an encoder (16), which identifies one or a plurality of operated keys (11a) of a keyboard, serving as the input device (11), by means of a bi-phase code, and has a parallel-series transformer (17), via which the bi-phase code is supplied to the modulator (15).

5. Control device according to one of claims 1 to 4, characterised in that the receiver (21) has a decoder (26), which decodes the bi-phase code issued by the demodulator and supplies it, as the control signal, to the appropriate operating unit (23) via a series-parallel transformer (30).

## Revendications

1. Dispositif de commande électrique pour véhicules automobiles dans lequel le volant, qui peut tourner par rapport au châssis, présente, outre un contact d'avertisseur (4) qui est relié à l'avertisseur (6) ou au relais d'avertisseur par un conducteur d'avertisseur (5) subdivisé par une bague glissante (7) en une partie du côté volant et une partie du côté châssis (8, 9), un dispositif d'introduction (11), d'informations de commande qui doivent être envoyées à des unités fonctionnelles du véhicule, informations qui peuvent être transmises, au moyen d'un émetteur (10) monté sur le volant (2) qui émet l'information de commande sous forme de signaux codés superposés à un signal porteur à haute fréquence et dont la sortie est connectée à la partie de conducteur d'avertisseur du côté volant (8), après désaccouplement d'avec la partie du conducteur d'avertisseur du côté châssis (9), à au moins un récepteur (21) qui est monté sur une partie du véhicule autre que le volant et qui, après démodulation des signaux à haute fréquence, convertit les signaux codés en signaux de commande pour les unités fonctionnelles, caractérisé en ce que la sortie de l'émetteur (10) est reliée à la partie du conducteur d'avertisseur du côté volant (8) au moyen d'un élément d'accouplement bloquant le courant continu (19) et l'entrée du récepteur (21; 212; 121a) est reliée directement, au moyen d'un élément d'accouplement bloquant le courant continu (27), à la partie du conducteur du côté châssis entre la bague de glissement (7) et l'avertisseur (6) ou le relais d'avertisseur, et en ce que les informations de commande sont modulées sur le signal porteur à haute fréquence sous forme de code biphase.

2. Dispositif de commande selon la revendication 1, caractérisé en ce que l'émetteur (10) est conçu pour une fréquence de 40 à 60 kHz, de préférence d'environ 50 kHz.

3. Dispositif de commande selon la revendication 1 ou 2, caractérisé par un dispositif de commutation qui, en conséquence de l'introduction d'une information de commande, commute l'émetteur (10) dans une position de mode d'émission à partir d'une position de repos.

4. Dispositif de commande selon l'une quelconque des revendications 1 à 3, caractérisé en ce que l'émetteur (10) comporte un codeur (16) qui identifie par un code biphase une ou plusieurs touches (11a) manoeuvrées sur un clavier servant de dispositif d'introduction (11), et un convertisseur parallèle-série (17) au moyen duquel le code biphase est appliqué au modulateur (15).

5. Dispositif de commande selon l'une quelconque des revendications 1 à 4, caractérisé en ce que le récepteur (21) comporte un décodeur (26) qui décode le code biphase délivré par le démodulateur et l'applique en tant que signal de commande à l'unité fonctionnelle correspondante (23) au moyen d'un convertisseur série-parallèle (30).

Fig.1

Fig.2

# Fig.3

Fig.4

Fig.5

EP 0 153 434 B1